# EUROPÄISCHE PATENTSCHRIFT

(11) **EP 0 584 749 B1**
(45) Veröffentlichungstag und Bekanntmachung des Hinweises auf die Patenterteilung: **07.05.1997**
(21) Anmeldenummer: 93113385.4
(22) Anmeldetag: 21.08.1993
(51) Int. Cl.: C08L 25/02, C08K 3/40, C08K 7/14, C08L 25/12

(54) **Mischungen aus Styrolharz und Glas-Verstärkungsmittel**
Blends of styrene resin, imide resin and glass reinforcement
Mélanges de résines styrènes et imides avec des renforcements de verre

(30) Priorität: 27.08.1992 DE 4228571
(43) Veröffentlichungstag der Anmeldung: 02.03.1994
(73) Patentinhaber: BASF Aktiengesellschaft, 67063 Ludwigshafen (DE)
(72) Erfinder: Decker, Andreas, Dr., D-6700 Ludwigshafen (DE); Guentherberg, Norbert, Dr., D-6720 Speyer (DE)

(56) Entgegenhaltungen:
- EP-A- 0 095 274
- DE-A- 4 138 572

## Beschreibung

Wie bei allen glasfaserverstärkten Thermoplasten muß auch bei glasfaserverstärkten Styrolcopolymeren, zwischen den organischen Polymeren und der (anorganisch-polaren) Glasoberfläche eine dauerhafte Bindung geschaffen werden.

Dies wird vor allem dadurch erreicht, daß ein sog. Haftungsvermittler zugesetzt wird, der einerseits zu dem organischen Kunstharz und andererseits zu der Glasoberfläche eine gewisse Affinität besitzt.

In der EP-A1-303 919 werden als Haftungsvermittler Copolymere von Styrol, Acrylnitril und Maleinsäureanhydrid vorgeschlagen. Das Kunstharz ist dabei ein Styrol-Acrylnitril-(SAN-)Copolymer.

Diese Haftungsvermittler haben jedoch einen Nachteil; die entsprechenden Mischungen sind unter den üblichen Bedingungen, d.h. vor allem beim Spritzgießen schlecht verarbeitbar.

Es wurde nun gefunden, daß bestimmte (Meth)acrylimidcopolymerisate sich hervorragend als Haftungsvermittler für glasfaserverstärkte Styrol-Acrylnitrilcopolymerisate eignen.

Unmittelbarer Erfindungsgegenstand ist daher eine thermoplastische Formmasse aus - bezogen auf die Summe aus A, B, C und D -
A: 30 bis 95 (bevorzugt 35 bis 90) Gew.-% eines Copolymeren A aus, jeweils bezogen auf A
   a₁: 50 bis 95 (bevorzugt 55 bis 90, insbesondere 60 bis 80) Gew.-% Styrol, a-Methylstyrol, einem kernsubstituierten Styrolderivat oder Mischungen dieser Monomeren (a₁) und
   a₂: 5 bis 50 (bevorzugt 10 bis 45, insbesondere 20 bis 40) Gew.-% Acrylnitril (a₂)
B: bis zu 60 (bevorzugt 4 bis 50) Gew.-% eines Pfropfmischpolymerisats B
   b₁: hergestellt entweder durch Emulsionspolymerisation von, bezogen auf B, 15 bis 85 (bevorzugt 20 bis 75, insbesondere 30 bis 70) Gew.-% eines Monomerengemischs auf der Grundlage entweder von
   b₁₁: Styrol-Acrylnitril im Verhältnis 9:1 bis 4:6 oder
   b₁₂ Styrol-Acrylnitril-Methylmethacrylat im Verhältnis 19:1:0 bis 8:6:6
      auf 15 bis 85 (bevorzugt 20 bis 75, insbesondere 30 bis 70) Gew.-% eines als Emulsion gewonnenen Latex eines Elastomeren auf der Grundlage von Butadien oder Acrylester als Pfropfgrundlage;
   oder durch
   b₂: Lösungspolymerisation von, bezogen auf B, 15 bis 85 (bevorzugt 20 bis 75, insbesondere 30 bis 70) Gew.-% eines Monomerengemischs auf der Grundlage von
   b₂₁: Styrol-Acrylnitril im Verhältnis 9:1 bis 4:6 oder
   b₂₂: Styrol-Acrylnitril-Methylmethacrylat im Verhältnis 19:1:1 bis 8:6:6
      auf 15 bis 85 (bevorzugt 25 bis 80, insbesondere 30 bis 70) Gew.-% eines in Lösung hergestellten Elastomeren auf der Grundlage von Butadien oder eines Acrylesters oder eines EPDM-Elastomeren als Pfropfgrundlage;
C: 1 bis 40 (bevorzugt 5 bis 35) Gew.-% eines Verstärkungsmittels C auf der Grundlage eines anorganischen Glases sowie
D: 0,1 bis 10 (bevorzugt 1,5 bis 10, insbesondere 3 bis 10) Gew.-% eines Copolymeren D aus, bezogen auf B,
   d₁: 10 bis 90 (bevorzugt 25 bis 90, insbesondere 30 bis 89) Gew.-% Einheiten der allgemeinen Formel I 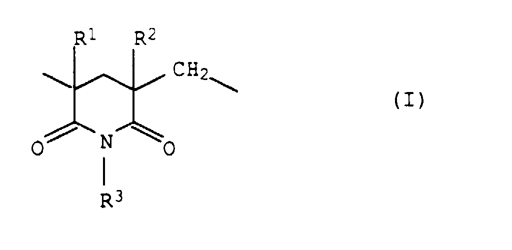 in der R¹ und R² Wasserstoff oder Methyl und R³ Wasserstoff, C₁-C₈-Alkyl, C₅-C₁₂-Cycloalkyl oder C₆-C₁₆-Aryl oder -Arylalkyl bedeuten und
   d₂: 10 bis 90 (bevorzugt 10 bis 75, insbesondere 11 bis 70) Gew.-% Einheiten abgeleitet von einem copolymerisierbaren Monomeren ausgewählt aus Styrol, α-Methylstyrol, (Meth)acrylnitril oder (Meth)acrylsäureestern,
   mit der Maßgabe, daß die Säurezahl S des Copolymeren D mindestens 0,5 meq/g beträgt.

Die erfindungsgemäßen Formmassen können ferner bis zu 20 Gewichtsteile - bezogen auf 100 Gewichtsteile der Bestandteile A bis D üblicher Zuschlagstoffe, wie Stabilisatoren, Antioxidantien, Antistatika, Fließverbesserer, Entformungshilfsmittel, Farbstoffe, Pigmente oder Flammschutzmittel enthalten. Geeignete Flammschutzmittel sind z. B. solche aus der Klasse der halogenierten, vorzugsweise bromierten, nieder- und hochmolekularen Verbindungen, wie Aromaten, Arylethern, Arylalkylethern, Arylaminen, Arylanhydriden, Phenolen, Arylalkylimiden und Arylsiloxanen. Ein ebenfalls in vielen Fällen nützlicher Zusatz sind Polyester, z.B. Polyethylen- oder Polybutylenterephthalat.

Der erfindungsgemäße Haftvermittler D ist bevorzugt in einer Menge von 1,5 bis 10 Gew.-%, und ganz besonders bevorzugt in einer Menge von 3 bis 10 Gew.-% in den Formmassen enthalten.

### Komponente A

Als Komponente A der erfindungsgemäßen Formmassen werden Styrol(Meth)acrylnitril-Copolymerisate, Styrol-Methyl(meth)acrylat-Copolymere oder Copolymerisate aus Styrol, Methylmethacrylat und (Meth)acrylnitril angewendet; diese bestehen im wesentlichen aus Copolymerisaten, die 5 bis 50 Gew.-%, insbesondere 20 bis 40 Gew.-% (Meth)acrylnitril und/oder Methyl(meth)acrylat, vorzugsweise Acrylnitril und/oder Methylmethacrylat als Monomere a₂ und 50 bis 95 Gew.-%, insbesondere 60 bis 80 Gew.-% Styrol als Monomer a1 einpolymerisiert enthalten. Der Styrolbestandteil kann, um die Wärmeformbeständigkeit zu verbessern, ganz oder teilweise durch a-Methylstyrol oder kernalkyliertes Styrol, insbesondere a-Methylstyrol ersetzt sein. Die besonders bevorzugt angewendeten Styrol-Acrylnitril-Copolymerisate sind auch im Handel erhältlich und können z.B. nach der Lehre der DE-AS 10 01 001 bzw. DE-PS 10 03 436 hergestellt werden. Der Molekulargewichtsbereich der Copolymerisate kann bei 80.000 bis 500.000 (Gewichtsmittel M_{w}, z.B. aus Lichtstreuung) betragen.

### Komponente B

Die Komponente B bilden Pfropfmischpolymerisate, die nach Bedarf angewendet werden. Diese Pfropfmischpolymerisate sind aufgebaut, jeweils bezogen auf B, aus 15 bis 85 Gew.-% eines Gemisches aus Styrol und Acrylnitril, und gegebenenfalls Methylmethacrylat als weiterem Copolymeren, im Verhältnis von 9:1 bis 4:6 als Pfropfhülle und 15 bis 85 Gew.-% einer elastomeren Pfropfgrundlage (Kautschukkomponente) auf Basis eines Homo- oder Copolymeren von Butadien oder Acrylester. Wenn Methylmethacrylat mitverwendet wird, beträgt das Verhältnis S:A:MMA i.a. zwischen 19:1:0 und 8:6:6.

Die Herstellung der Pfropfmischpolymerisate B ist bekannt. Sie können hergestellt werden durch Polymerisation eines Gemisches von z.B. Styrol und Acrylnitril und/oder Methacrylnitril in Gegenwart eines Kautschuks.

Der Kautschuk soll eine Glastemperatur (nach K.H. Illers und H. Breuer, Kolloid-Zeitschrift 137 (1961), Seite 110) haben, die unter 0°C, vorzugsweise unter -30°C liegt. Als Kautschuk kommen z.B. in Betracht: Polybutadien (vgl. DE-OS 14 20 775 und DE-OS 14 95 089); Copolymerisate aus Butadien und Styrol (vgl. GB-PS 649 166); Polyacrylsäureester (vgl. DE-AS 12 60 135) sowie Copolymerisate aus Acrylsäureester und Butadien (vgl. DE-AS 12 38 207); ferner Elastomere auf der Grundlage von Copolymerisaten von Acrylsäureestern mit Styrol, Acrylnitril und Vinylethern.

Außer Styrol kann in bekannter Weise α-Methylstyrol und/oder kernalkylierte Styrole mit bis zu 12 C-Atomen, als monomere (Meth)acrylsäuralkylester solche mit C₁-C₈-Alkylestern sowie Methacrylnitril anstelle von Acrylnitril oder Mischungen davon verwendet werden.

Die Pfropfcopolymerisation kann dabei bekannterweise in Lösung, Suspension oder vorzugsweise in Emulsion erfolgen. Die Weichphase des Pfropfmischpolymerisats weist bei der bevorzugten Herstellung des Kautschuks und der Pfropfung in Emulsion einen mittleren Teilchendurchmesser (d₅₀-Wert der integralen Masseverteilung) von 0,08 µm auf. In der Regel liegt nach an sich bekannter Vergrößerung der Teilchen, z.B. durch Agglomeration, der d₅₀-Wert im Bereich 0,1 bis 0,6 µm. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft.

Der Teil der Monomeren, der nicht auf den Kautschuk gepfropft ist, copolymerisiert für sich. Dieses Copolymerisat kann bei den hier in Rede stehenden Gemischen der Komponente A zugerechnet werden. Man kann den Anteil der gepfropften Monomeren dadurch ermitteln, daß man den Gelgehalt der Pfropfcopolymeren bestimmt.

Das Pfropfcopolymerisat wird in einem Lösungsmittel, z.B. in Methethylketon, gelöst. Dabei lösen sich nur die nicht gepfropften, für sich allein copolymerisierten Monomeren. Dieser Bestandteil ist, sofern vorhanden, für die Schlagzähigkeit der erfindungsgemäßen Formmasse nicht verantwortlich.

### Komponente C

Die erfindungsgemäße Formmasse enthält übliche Verstärkungsmittel, wie Glasfasern, Glaskugeln, Mineralfasern, Aluminiumoxidfasern, Glimmer, Quarzmehl, Wollastonit etc. Besonders bevorzugt sind glasfaserverstärkte Formmassen, wobei die Glasfasern sowohl als Kurzglasfasern mit einer mittleren Länge von 0,05 bis 0,5 mm oder in Granulatlänge (Glasfaserlänge von 2,0 bis 10 mm) vorliegen können.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 µm, vorzugsweise 3 bis 6 µm, eingesetzt werden.

### Komponente D

Von den Einheiten der allgemeinen Formel (I) sind diejenigen bevorzugt, in den R¹ und R² gleich sind. Dies entspricht Polymerisaten, die im wesentlichen aus Monomerenheiten von Acrylsäure- bzw. Methacrylsäureestern aufgebaut sind und anschließend imidiert werden.

Bevorzugte Reste R³ sind neben Wasserstoff vor allem Alkylgruppen, insbesondere Methyl oder eine Cyclohexylgruppe. Bevorzugte Arylreste sind Phenyl sowie solche, die 1 bis 4 Methylengruppen als Brückenglied zwischen N-Atom und dem aromatischen Rest enthalten, insbesondere Benzyl.

Die Copolymeren D können in Anlehnung an die in der US-PS 4 246 374 und EP 234 726 beschriebenen Verfahren hergestellt werden, also durch polymeranaloge Umsetzung von beispielsweise Polymethylmethacrylat mit geeigneten primären Aminen R³NH₂ oder mit Ammoniak zum entsprechenden Polymethacrylimid: 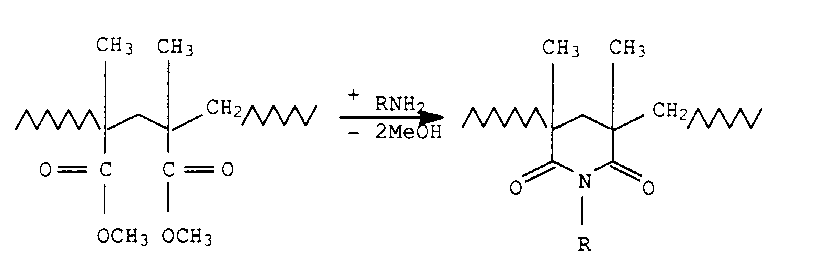 Als Amine sind die in der DE-A 41 42 575 beschriebenen Verbindungen besonders geeignet.

Erfindungsgemäß weisen die geeigneten Copolymeren D eine relativ hohe Säurezahl S, nämlich mindestens 0,5 meq/g, bevorzugt mindestens 0,6 meq/g auf.

Diese Säurezahl wird in an sich bekannter Weise dadurch ermittelt, daß die mit Lauge titrierbaren Säureäquivalente in einer Lösung des Polymeren bestimmt werden.

Hierzu werden 0,3 g Polymer in 75 ml eines Gemisches aus gleichen Volumenteilen Dichlormethan und Methanol gelöst und die Mischung mit überschüssiger 0,1 N Natriumhydroxid-Lösung versetzt, die dann mit 0,1 N Salzsäure potentiometrisch zurücktitriert wird. Der ermittelte Wert wird gegebenenfalls um den Lösungsmittel-Blindwert korrigiert.

Die Säurezahl wird dann als Gehalt an Säure in Äquivalenten pro Kilogramm imidisierbares Polymer berechnet.

### Komponente E

Die erfindungsgemäße Formmasse kann als Komponente E Zusatzstoffe enthalten, die für SAN-Polymerisate und Pfropfmischpolymerisate auf Basis von ABS, ASA etc. oder deren Mischungen typisch und gebräuchlich sind. Als solche Zusatzstoffe seien beispielsweise genannt: Füllstoffe sowie Materialien zur Erhöhung der Abschirmung von elektromagnetischen Wellen (z.B. Metallflocken, -pulver, -fasern, metallbeschichtete Füllstoffe), Farbstoffe, Pigmente, Antistatika, Antioxidantien, Stabilisatoren, auch Flammschutzmittel und insbesondere die Schmiermittel, die für die Weiterverarbeitung der Formmasse, z.B. bei der Herstellung von Formkörpern bzw. Formteilen, erforderlich sind. Von den Schmiermitteln sind insbesondere diejenigen auf Basis von N,N'-Bistearylethylendiamin (Acrawachs) zu nennen, die bevorzugt angewendet werden, um die Verarbeitungseigenschaften der Formmassen auf einem hohen Niveau zu halten. Ebenso geeignet sind Silikonöle, Polyglykole und Stearate.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern. Besonders bevorzugt werden aus den nach dem erfindungsgemäßen Verfahren hergestellten Formmassen Formteile durch Spritzgießen für den Automobilbau hergestellt.

Verwendung für Gehäuse von Elektrogeräten, Haushaltsgeräten, Telefonen, für Platten, Rohre und im Kfz-Bau.

### Prüfung

Die in den nachstehenden Beispielen verwendeten Eigenschaftsgrößen werden wie folgt bestimmt:
Schlagzähigkeit aₙ bzw. aₙ₂ [kJ/m²]
nach DIN 53 453 an bei 250°C gespritzten Normkleinstäben
E-Modul [N/mm²]
nach DIN 53 457 an einem Zugstab nach ISO 3167
Bruchspannung [N/mm²]
nach DIN 53 455 an einem Zugstab nach ISO 3167
Für die nachstehenden Beispiele wurden folgende Einzelbestandteile verwendet:

### Komponente A:

SAN-Copolymerisat mit 35 % Acrylnitril; 65 % Styrol VZ = 80 ml/g

### Komponente B:

- B-1: E-Kautschukkomponente 60 % Polybutadien, 15 % Acrylnitril, 25 % Styrol
- B-2: E-Kautschukkomponente 60 % Poly-n-butylacrylat (vernetzt mit 2 Gew.-% DCPA), 15 % Acrylnitril, 25 % Styrol

### Komponente C:

E-Glasfasern (Rovings)
Faserdurchmesser 10 µm (Fabrikat OCF 429)

### Komponente D:

D-1 Polymethacrylimid, hergestellt durch Umsetzung eines Copolymerisats aus 99 Gew.-% MMA und 1 Gew.-% MA (Methacrylsäure) mit Cyclohexylamin nach US 4 246 374
Imidgehalt = 47 %; VZ = 50
Säurezahl = 0,94 meq/g
D-2 Polymethacrylimid (Kamax T 170; Rohm & Haas) wobei R³ = CH₃
Imidgehalt = 87 %; VZ = 57
Säurezahl = 0,67 meq/g
D-3 Polymethacrylimid, hergestellt durch Umsetzung eines Copolymerisats aus 99 Gew.-% MMA und 1 Gew.-% MA mit Cyclohexylamin (s.o.) und anschließender Rückveresterung der freien Säuregruppen mit Trimethylorthoformiat nach EP 216 505 (zum Vergleich)
Imidgehalt = 62 %; VZ = 67
Säurezahl = 0,1 meq/g
D-4 Polymethacrylimid (Paraloid EXL 4241; Rohm & Haas) wobei R³ = CH₃ (zum Vergleich)
Imidgehalt = 74 %; VZ = 82
Säurezahl = 0,02 meq/g

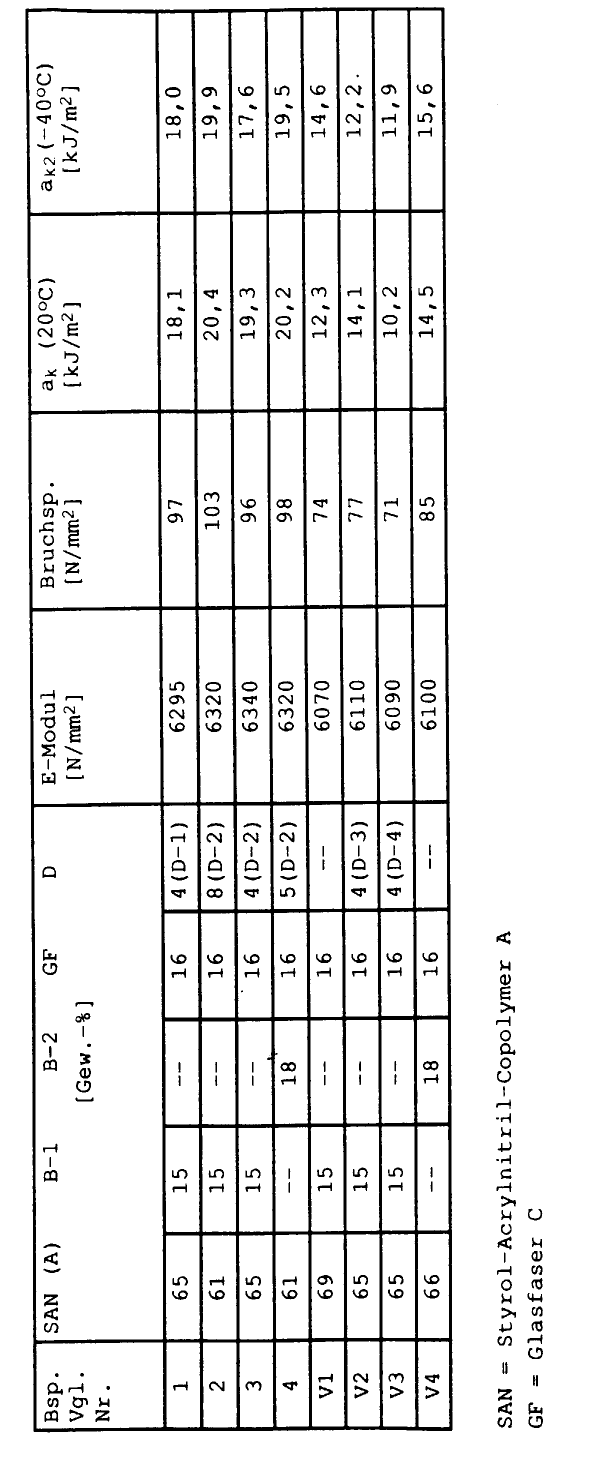

## Patentansprüche

1. Thermoplastische Formmasse aus - bezogen auf die Summe aus A, B, C und D -
A: 30 bis 95 Gew.-% eines Copolymeren A aus, jeweils bezogen auf A
a₁: 50 bis 95 Gew.-% Styrol, a-Methylstyrol, einem kernsubstituierten Styrolderivat oder Mischungen dieser Monomeren (a₁) und
a₂: 5 bis 50 Gew.-% Acrylnitril (a₂)
B: bis zu 60 Gew.-% eines Pfropfmischpolymerisats B
b₁: hergestellt entweder durch Emulsionspolymerisation von, bezogen auf B, 15 bis 85 Gew.-% eines Monomerengemischs auf der Grundlage entweder von
b₁₁: Styrol-Acrylnitril im Verhältnis 9:1 bis 4:6 oder
b₁₂ Styrol-Acrylnitril-Methylmethacrylat im Verhältnis 19:1:0 bis 8:6:6
auf 15 bis 85 Gew.-% eines als Emulsion gewonnenen Latex eines Elastomeren auf der Grundlage von Butadien oder Acrylester als Pfropfgrundlage;
oder durch
b₂: Lösungspolymerisation von, bezogen auf B, 15 bis 85 Gew.-% eines Monomerengemischs auf der Grundlage von
b₂₁: Styrol-Acrylnitril im Verhältnis 9:1 bis 4:6 oder
b₂₂: Styrol-Acrylnitril-Methylmethacrylat im Verhältnis 19:1:1 bis 8:6:6
auf 15 bis 85 Gew.-% eines in Lösung hergestellten Elastomeren auf der Grundlage von Butadien oder eines Acrylesters oder eines EPDM-Elastomeren als Pfropfgrundlage;
C: 1 bis 40 Gew.-% eines Verstärkungsmittels C auf der Grundlage eines anorganischen Glases sowie
D: 0,1 bis 10 Gew.-% eines Copolymeren D aus, bezogen auf B,
d₁: 10 bis 90 Gew.-% Einheiten der allgemeinen Formel I 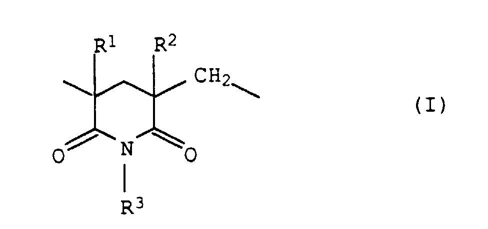 in der R¹ und R² Wasserstoff oder Methyl und R³ Wasserstoff, C₁-C₈-Alkyl, C₅-C₁₂-Cycloalkyl oder C₆-C₁₆-Aryl oder -Arylalkyl bedeuten und
d₂: 10 bis 90 Gew.-% Einheiten abgeleitet von einem copolymerisierbaren Monomeren ausgewählt aus Styrol, α-Methylstyrol, (Meth)acrylnitril oder (Meth)acrylsäureestern,
mit der Maßgabe, daß die Säurezahl S des Copolymeren D mindestens 0,5 meq/g beträgt.

2. Verwendung der Formmasse nach Anspruch 1 zur Herstellung von Formkörpern.

## Claims

1. A thermoplastic molding material comprising, based on the sum of A, B, C and D,
A: 30 to 95% by weight of a copolymer A comprising, in each case based on A,
a₁: 50 to 95% by weight of styrene, α-methylstyrene, a nuclear-substituted styrene derivative or mixtures of these monomers (a₁) and
a₂: 5 to 50% by weight of acrylonitrile (a₂)
B: up to 60% by weight of a graft copolymer B
b₁: prepared either by emulsion polymerization of, based on B, 15 to 85% by weight of a monomer mixture based either on
b₁₁: styrene-acrylonitrile in the ratio 9:1 to 4:6, or
b₁₂: styrene-acrylonitrile-methyl methacrylate in the ratio 19:1:0 to 8:6:6
on 15 to 85% by weight of a latex, obtained as an emulsion, of an elastomer based on butadiene or acrylic ester as grafting base;
or by
b₂: solution polymerization of, based on B, 15 to 85% by weight of a monomer mixture based on
b₂₁: styrene-acrylonitrile in the ratio 9:1 to 4:6 or
b₂₂: styrene-acrylonitrile-methyl methacrylate in the ratio 19:1:1 to 8:6:6
on 15 to 85% by weight of an elastomer, prepared in solution, based on butadiene or an acrylic ester or an EPDM elastomer as grafting base;
C: 1 to 40% by weight of a reinforcing agent C based on an inorganic glass, and also
D: 0.1 to 10% by weight of a copolymer D of, based on B,
d₁: 10 to 90% by weight of units of the formula I 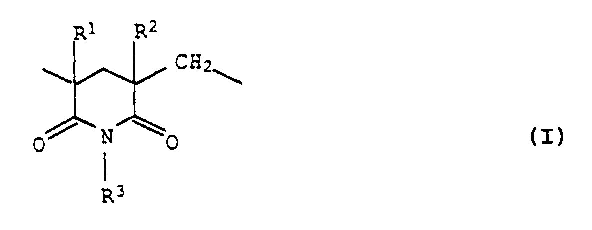 in which R¹ and R² are hydrogen or methyl and R³ is hydrogen, C₁-C₈alky, C₅-C₁₂cycloalkyl or C₆-C₁₆aryl or C₆-C₁₆aralkyl, and
d₂: 10 to 90% by weight of units derived from a copolymerizable monomer selected from styrene, α-methylstyrene, (meth) acrylonitrile or (meth)acrylic acid esters,
with the proviso that the acid number S of the copolymer D is at least 0.5 meq/g.

2. The use of the molding material as claimed in claim 1 for producing molded articles.

## Revendications

1. Masse à mouler thermoplastique composée de - par rapport à la somme de A, B, C et D -
A: 30 à 95 % en poids d'un copolymère A constitué de, respectivement par rapport à A
a₁ : 50 à 95 % en poids de styrène, d'α-méthylstyrène, d'un dérivé du styrène substitué sur le noyau ou de mélanges de ces monomères (a₁) et
a₂ : 5 à 50 % en poids d'acrylonitrile (a₂)
B : jusqu'à 60 % en poids d'un copolymère greffé B
b₁ : préparé soit par polymérisation en émulsion de, par rapport à B, 15 à 85 % en poids d'un mélange de monomères, à base de, soit
b₁₁ : styrène - acrylonitrile dans un rapport de 9 : 1 à 4 : 6, soit
b₁₂ : styrène - acrylonitrile - méthacrylate de méthyle dans un rapport de 19 : 1 : 0 à 8 : 6 : 6
sur 15 à 85 % en poids d'un latex obtenu sous forme d'une émulsion d'un élastomère à base de butadiène ou d'ester acrylique à titre de base de greffage;
soit par
b₂ : polymérisation en solution de, par rapport à B, 15 à 85 % en poids d'un mélange de monomères à base de
b₂₁ : styrène - acrylonitrile dans un rapport de 9 : 1 à 4: 6, soit
b₂₂: styrène - acrylonitrile - méthacrylate de méthyle dans un rapport de 19 : 1 : 1 à 8 : 6 : 6
sur 15 à 85 % en poids d'un élastomère préparé en solution, à base de butadiène ou d'un ester acrylique ou d'un élastomère EPDM à titre de base de greffage;
C : 1 à 40 % en poids d'un agent de renforcement C à base d'un verre inorganique, de même que
D : 0,1 à 10 % en poids d'un copolymère D constitué de, par rapport à B,
d₁ : 10 à 90 % en poids d'unités répondant à la formule générale I 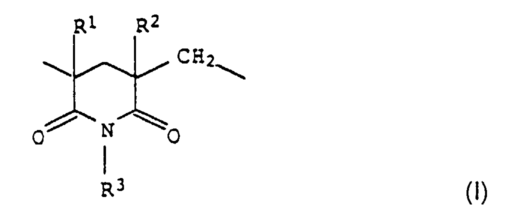 dans laquelle R¹ et R² représentent un atome d'hydrogène ou un groupe méthyle et R³ représente un atome d'hydrogène, un groupe alkyle en C₁-C₈, un groupe cycloalkyle en C₅-C₁₂ ou un groupe aryle ou arylalkyle en C₆-C₁₆, et
d₂ : 10 à 90 % en poids d'unités dérivées d'un monomère copolymérisable choisi parmi le styrène, l'α-méthylstyrène, le (méth)acrylonitrile ou les esters de l'acide (méth)acrylique,
sous condition que le nombre d'acide S du copolymère D vaut au moins 0,5 méq/g.

2. Utilisation de la masse à mouler selon la revendication 1, pour la fabrication d'objets moulés.
